# EUROPEAN PATENT SPECIFICATION

(11) **EP 1 318 321 B1**
(45) Date of publication and mention of the grant of the patent: **18.08.2004**
(21) Application number: 02027270.4
(22) Date of filing: 06.12.2002
(51) Int. Cl.: F16D 65/092

(54) **Vehicle brake pad, in particular for a railway vehicle**
Bremsbelag, insbesondere für ein Schienenfahrzeug
Plaquette de frein, notamment pour véhicule ferroviaire

(30) Priority: 07.12.2001 IT TO20011145
(43) Date of publication of application: 11.06.2003
(73) Proprietor: FEDERAL-MOGUL OPERATIONS ITALY S.r.l., 12084 Mondovi (IT)
(72) Inventor: Aimo, Marco, 12061 Carru (IT)
(74) Representative: Jorio, Paolo

(56) References cited:
- EP-A- 0 624 735
- DE-A- 19 840 065
- DE-U- 29 821 113
- US-A- 5 934 418

## Description

The present invention relates to a vehicle brake pad, in particular for a railway vehicle. More specifically, the present invention relates to a brake pad of the type comprising a supporting plate, and a number of blocks of friction material fitted to and detached from the supporting plate. Such a brake pad is for instance known from US-A-5.934.418.

A need is felt for a brake pad of the above type, which comprises blocks of friction material movable towards the supporting plate from the rest position when braking, which comprises a relatively small number of component parts, and which provides for balanced, effective braking action while maintaining the blocks of friction material in fixed relative positions.

It is an object of the present invention to provide a vehicle brake pad, in particular for a railway vehicle, designed to meet the above requirements in a straightforward, low-cost manner.

According to the present invention, there is provided a vehicle brake pad, in particular for a railway vehicle; the brake pad comprising a supporting plate; a number of blocks of friction material arranged on said supporting plate and cooperating frictionally with a rotary braking member; and connecting means for connecting said blocks to said supporting plate, so that said blocks are maintained in respective rest positions extracted from said supporting plate; characterized in that said connecting means comprise deformable elastic means enabling said blocks to move from said rest positions to respective withdrawn work positions; and retaining means for maintaining said blocks connected to said elastic means at least in said rest positions; said elastic means being formed in one piece with said supporting plate.

A non-limiting embodiment of the invention will be described by way of example with reference to the accompanying drawings, in which:
Figure 1 shows a view in perspective of a preferred embodiment of the vehicle brake pad, in particular for a railway vehicle, according to the present invention;
Figure 2 shows an exploded view, with parts removed for clarity, of the Figure 1 brake pad;
Figure 3 shows a larger-scale section of a detail of the brake pad along line III-III in Figure 1;
Figure 4 shows the same view as in Figure 3, of a variation of the Figure 3 detail.

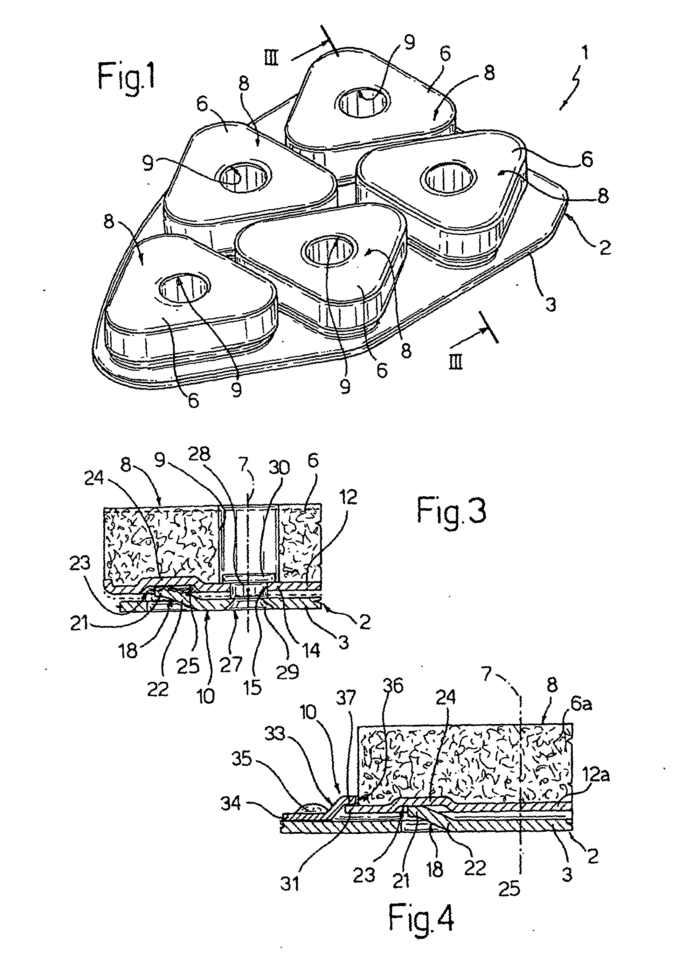

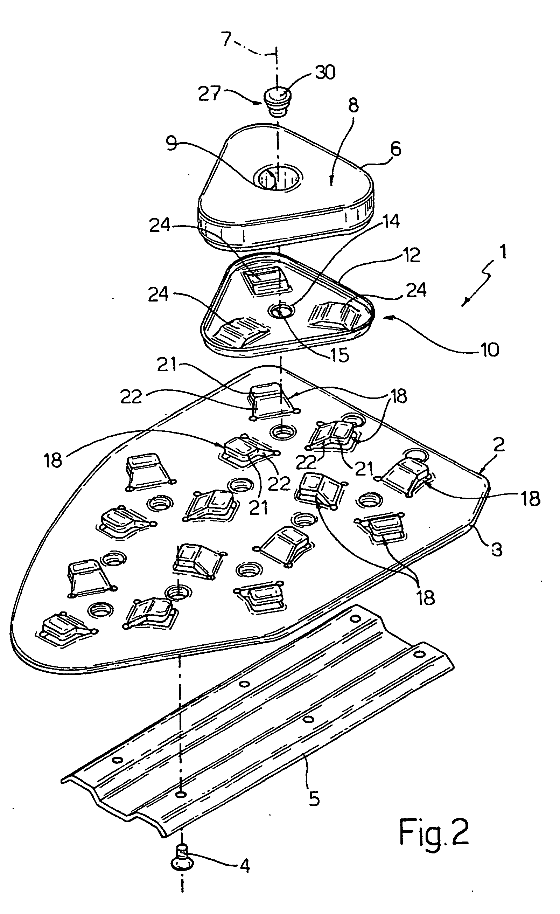

Number 1 in Figure 1 indicates a brake pad for a vehicle (not shown), in particular a railway vehicle or heavy-duty motor vehicle.

As shown in Figures 1 and 2, brake pad 1 comprises a plate 2 made of spring metal material, preferably hardened and tempered C70 steel, and in turn comprising a flat portion 3 connected integrally by rivets 4 (only one shown in Figure 2) to a slide 5 for connection to a brake calliper (not shown).

Plate 2 supports a number of blocks 6 of friction material, which are arranged on the opposite side of plate 2 to slide 5, are separate from one another, are prismatic in shape with a base in the form of an equilateral triangle with rounded vertices, each have a respective barycentric axis 7 perpendicular to portion 3, and are bounded by respective flat surfaces 8 perpendicular to axes 7 and cooperating frictionally with a brake disk (not shown).

Each block 6 defines a respective circular through hole 9 extending along axis 7, and is connected to plate 2 by a respective connecting device 10, which maintains block 6 in an extracted rest position - in particular, detached axially from plate 2 - but which, when braking, enables block 6 to move axially, from the rest position, towards plate 2 into a withdrawn work position (shown partly by the dash line in Figure 3).

As shown in Figures 2 and 3, each device 10 comprises a respective metal wall 12 facing plate 2, and which has the same outer profile as blocks 6, is connected integrally to the base of relative block 6, and comprises an intermediate portion 14 defining a circular hole 15 coaxial with and smaller in diameter than relative hole 9.

Each device 10 also comprises three elastic tabs 18, which are integral with plate 2, are formed by cutting and bending respective portions of plate 2, are equally spaced angularly about axis 7, and project from portion 3, radially with respect to axis 7 and towards respective rounded vertices of wall 12.

More specifically, each tab 18 comprises a respective flat end portion 21 parallel to portion 3; and a respective sloping portion 22 attached to portion 3; and portions 21 are housed in respective seats 23 formed in walls 12, to prevent blocks 6 from moving, with respect to plate 2, in directions perpendicular to respective axes 7.

As shown in Figure 3, seats 23 are defined by respective hollow contoured portions 24 formed close to the rounded vertices of walls 12, are approximately the same size as but no smaller than portions 21, and have respective flat bottom surfaces 25 perpendicular to axis 7. To keep portions 21 resting on surfaces 25, each block 6 is provided with a respective axial retaining and guide pin 27 forming part of device 10, and which comprises a cylindrical intermediate portion 28 engaging hole 15 in axially-sliding manner, and two opposite end portions 29, 30. Portion 29 is fixed axially to portion 3 of plate 2, while portion 30 defines a retaining head housed inside hole 9 and resting axially on portion 14, which is thus interposed axially between head 30 and plate 2.

Figure 4 shows the same view as in Figure 3, of a variation of brake pad 1, the component parts of which are indicated, where possible, using the same reference numbers as in Figures 1 to 3.

In the Figure 4 variation, brake pad 1 comprises a number of blocks 6a of friction material, which differ from blocks 6 by having no holes 9. Blocks 6a are carried by respective walls 12a, which, unlike walls 12, have no holes 15, and each of which comprises a respective annular end portion 31 projecting radially outwards from relative block 6a. Also, pins 27 in the Figure 1-3 solution are replaced by a single retaining and guide body 33 (shown partly) defined by a plate, which surrounds blocks 6a, comprises a peripheral flange 34 fixed to portion 3 by a number of rivets 35, and has a number of holes 36 (only one of which is shown partly). Holes 36 are complementary in shape to that of blocks 6a, are each engaged in axially-sliding manner by a relative block 6a, and are bounded by respective lateral edges 37 for axially guiding blocks 6a. Portions 31 are interposed axially between body 33 and plate 2, so as to rest axially on edges 37 and keep walls 12a resting on tabs 18 when blocks 6a are in the respective rest positions.

When braking, the pressure exerted by brake pad 1 on the brake disk elastically deforms tabs 18 to allow blocks 6, 6a to move towards portion 3 of plate 2 independently of one another. Seats 23 retain portions 21 of tabs 18 to prevent blocks 6, 6a from moving in directions perpendicular to respective axes 7, while pins 27 or body 33 guide blocks 6, 6a axially and prevent walls 12, 12a from moving axially away from tabs 18.

As will be clear from the foregoing description, pad 1, on the one hand, comprises only a small number of component parts, by tabs 18 being formed in one piece with plate 2, and, on the other, provides for balanced, effective braking action, by blocks 6, 6a being axially movable to adapt to braking conditions, being independent of one another, and by moving towards plate 2 so that surfaces 8 are coplanar at all times in any position. Braking action is also balanced by the particular triangular shape of blocks 6, 6a and the particular arrangement of tabs 18.

By virtue of balancing the braking action along surfaces 8, in-service wear of blocks 6, 6a of brake pad 1 is substantially even over surfaces 8.

Despite the extremely high operating temperatures involved, the rigidity/elasticity characteristics of tabs 18 are excellent and remain unchanged over time, by virtue of the design and arrangement of tabs 18 and the material from which plate 2 is made.

Clearly, changes may be made to brake pad 1 as described and illustrated herein without, however, departing from the scope of the present invention.

In particular, the elastic tabs by which blocks 6, 6a are pushed into the respective rest positions may differ in form, location or number from those shown; and blocks 6, 6a may be connected to tabs 18 otherwise than as described and illustrated.

## Claims

1. A vehicle brake pad (1), in particular for a railway vehicle; the brake pad comprising a supporting plate (2); a number of blocks (6; 6a) of friction material arranged on said supporting plate (2) and cooperating frictionally with a rotary braking member; and connecting means (10) for connecting said blocks (6; 6a) to said supporting plate (2), so that said blocks (6; 6a) are maintained in respective rest positions extracted from said supporting plate (2); **characterized in that** said connecting means (10) comprise deformable elastic means (18) enabling said blocks (6; 6a) to move from said rest positions to respective withdrawn work positions; and retaining means (23, 30; 23, 33) for maintaining said blocks (6; 6a) connected to said elastic means (18) at least in said rest positions; said elastic means (18) being formed in one piece with said supporting plate (2).

2. A brake pad as claimed in Claim 1, **characterized in that** said blocks (6; 6a) are movable independently of one another along respective axes (7) perpendicular to said supporting plate (2); said elastic means (18) comprising, for each said block (6; 6a), at least one respective elastic tab (18) formed in one piece with said supporting plate (2).

3. A brake pad as claimed in Claim 2, **characterized in that** said elastic means (18) comprise at least two said elastic tabs (18) for each said block (6; 6a).

4. A brake pad as claimed in Claim 3, **characterized in that**, for each said block (6; 6a), said retaining means comprise a number of said elastic tabs (18) equally spaced angularly about the relative said axis (7).

5. A brake pad as claimed in any one of Claims 2 to 4, **characterized in that** each said elastic tab (18) is integral with said supporting plate (2) and formed by cutting and bending a relative portion of said supporting plate (2).

6. A brake pad as claimed in any one of Claims 2 to 5, **characterized in that** said connecting means (10) also comprise, for each said block (6; 6a), a respective supporting wall (12; 12a) integral with the block (6; 6a); said retaining means (23, 30; 23, 33) comprising first retaining means (30; 33) carried by said supporting plate (2) to keep said supporting walls (12; 12a) resting axially on said elastic tabs (18) when said blocks (6; 6a) are in said rest positions.

7. A brake pad as claimed in any one of Claims 2 to 6, **characterized in that** said connecting means (10) also comprise guide means (27; 33) carried by said supporting plate (2) to guide each said block (6; 6a) along the relative said axis (7).

8. A brake pad as claimed in Claims 6 and 7, **characterized in that** said first retaining means (30; 33) are carried by said guide means (27; 33).

9. A brake pad as claimed in Claim 8, **characterized in that** said guide means (27) comprise, for each said block (6; 6a), a respective axial pin (27) fitted in axially-sliding manner to the relative said supporting wall (12), and terminating with a head (30) located on the opposite axial side of said supporting wall (12) to said supporting plate (2) and defining said first retaining means.

10. A brake pad as claimed in Claim 8, **characterized in that** said first retaining means (33) comprise a retaining body (33) surrounding said blocks (6a).

11. A brake pad as claimed in Claim 10, **characterized in that** said retaining body (33) comprises a number of holes (36) engaged in axially-sliding manner by respective said blocks (6a); said supporting walls (12a) comprising respective end portions (31) interposed axially between said supporting plate (2) and said retaining body (33).

12. A brake pad as claimed in Claim 10 or 11, **characterized by** comprising a number of rivets (35) for connecting a peripheral portion (34) of said retaining body (33) to said supporting plate (2).

13. A brake pad as claimed in any one of Claims 6 to 12, **characterized in that** said retaining means (23, 30; 23, 33) also comprise second retaining means (23) for preventing each said block (6; 6a) from moving in directions perpendicular to the relative said axis (7).

14. A brake pad as claimed in Claim 13, **characterized in that** said second retaining means (23) are interposed between said elastic tabs (18) and said blocks (6; 6a).

15. A brake pad as claimed in Claim 14, **characterized in that** said second retaining means (23) comprise, for each said elastic tab (18), a relative seat (23) formed in the relative said supporting wall (12; 12a) and housing one end (21) of said elastic tab (18).

16. A brake pad as claimed in any one of the foregoing Claims, **characterized in that** said supporting plate (2) is made of spring steel.

17. A brake pad as claimed in any one of the foregoing Claims, **characterized in that** each said block (6; 6a) is prismatic in shape, with a triangular base with rounded vertices.

## Patentansprüche

1. Fahrzeugbremsbelag (1), insbesondere für ein Schienenfahrzeug; wobei der Bremsbelag umfasst: eine Trägerplatte (2); eine Anzahl von Blöcken (6; 6a) von Reibbelagwerkstoff, die auf der Trägerplatte (2) angeordnet sind und reibschlüssig mit einem Drehbremselement zusammenwirken; und Verbindungseinrichtungen (10) zum Verbinden der Blöcke (6; 6a) mit der Trägerplatte (2), so dass die Blöcke (6; 6a) in aus der Trägerplatte (2) herausgezogenen respektiven Ruhepositionen gehalten werden; **dadurch gekennzeichnet, dass** die Verbindungseinrichtungen (10) verformbare elastische Einrichtungen (18) umfassen, die ermöglichen, dass sich die Blöcke (6; 6a) von den Ruhepositionen zu respektiven zurückgezogenen Arbeitspositionen bewegen; und Halteeinrichtungen (23, 30; 23, 33), um die Blöcke (6; 6a) mindestens in den Ruhepositionen mit den elastischen Einrichtungen (18) verbunden zu halten; wobei die elastischen Einrichtungen (18) in einem Stück mit der Trägerplatte (2) ausgebildet sind.

2. Bremsbelag nach Anspruch 1, **dadurch gekennzeichnet, dass** die Blöcke (6; 6a) entlang respektiver zu der Trägerplatte (2) senkrechter Achsen (7) unabhängig voneinander bewegbar sind; wobei die elastischen Einrichtungen (18) für jeden besagten Block (6; 6a) mindestens eine respektive elastische Zunge (18) umfassen, die in einem Stück mit der Trägerplatte (2) ausgebildet ist.

3. Bremsbelag nach Anspruch 2, **dadurch gekennzeichnet, dass** die elastischen Einrichtungen (18) mindestens zwei besagte elastische Zungen (18) für jeden besagten Block (6; 6a) umfassen.

4. Bremsbelag nach Anspruch 3, **dadurch gekennzeichnet, dass** die Halteeinrichtungen für jeden besagten Block (6; 6a) eine Anzahl der elastischen Zungen (18) umfassen, die in gleichen Winkelabständen um die jeweilige besagte Achse (7) angeordnet sind.

5. Bremsbelag nach einem der Ansprüche 2 bis 4, **dadurch gekennzeichnet, dass** jede besagte elastische Zunge (18) als Einheit mit der Trägerplatte (2) ausgebildet ist und durch Schneiden und Biegen eines jeweiligen Teils der Trägerplatte (2) gebildet ist.

6. Bremsbelag nach einem der Ansprüche 2 bis 5, **dadurch gekennzeichnet, dass** die Verbindungseinrichtungen (10) auch für jeden besagten Block (6; 6a) eine respektive Trägerwand (12; 12a), die als Einheit mit dem Block (6; 6a) ausgebildet ist, umfassen; wobei die Halteeinrichtungen (23, 30; 23, 33) erste Halteeinrichtungen (30; 33) umfassen, die durch die Trägerplatte (2) getragen werden, um die Trägerwände (12; 12a) auf den elastischen Zungen (18) axial ruhend zu halten, wenn sich die Blöcke (6; 6a) in den Ruhepositionen befinden.

7. Bremsbelag nach einem der Ansprüche 2 bis 6, **dadurch gekennzeichnet, dass** die Verbindungseinrichtungen (10) auch Führungseinrichtungen (27; 33) umfassen, die durch die Trägerplatte (2) getragen werden, um jeden besagten Block (6; 6a) entlang der jeweiligen besagten Achse (7) zu führen.

8. Bremsbelag nach den Ansprüchen 6 und 7, **dadurch gekennzeichnet, dass** die ersten Halteeinrichtungen (30; 33) durch die Führungseinrichtungen (27; 33) getragen werden.

9. Bremsbelag nach Anspruch 8, **dadurch gekennzeichnet, dass** die Führungseinrichtungen (27) für jeden besagten Block (6; 6a) einen respektiven axialen Stift (27) umfassen, der auf axial verschiebbare Weise an der jeweiligen besagten Trägerwand (12) angebracht ist und der mit einem Kopf (30) endet, der auf der zu der Trägerplatte (2) entgegengesetzten axialen Seite der Trägerwand (12) lokalisiert ist und die ersten Halteeinrichtungen begrenzt.

10. Bremsbelag nach Anspruch 8, **dadurch gekennzeichnet, dass** die ersten Halteeinrichtungen (33) einen Haltekörper (33) umfassen, der die Blöcke (6a) umgibt.

11. Bremsbelag nach Anspruch 10, **dadurch gekennzeichnet, dass** der Haltekörper (33) eine Anzahl von Löchern (36) umfasst, die auf axial verschiebbare Weise durch respektive besagte Blöcke (6a) in Eingriff genommen werden; wobei die Trägerwände (12a) respektive Endteile (31) umfassen, die zwischen der Trägerplatte (2) und dem Haltekörper (33) axial eingefügt sind.

12. Bremsbelag nach Anspruch 10 oder 11, **gekennzeichnet durch** Umfassen einer Anzahl von Nieten (35) zum Verbinden eines peripheren Teils (34) des Haltekörpers (33) mit der Trägerplatte (2).

13. Bremsbelag nach einem der Ansprüche 6 bis 12, **dadurch gekennzeichnet, dass** die Halteeinrichtungen (23, 30; 23, 33) auch zweite Halteeinrichtungen (23) umfassen, um zu verhindern, dass sich jeder besagte Block (6; 6a) in zu der jeweiligen besagten Achse (7) senkrechten Richtungen bewegt.

14. Bremsbelag nach Anspruch 13, **dadurch gekennzeichnet, dass** die zweiten Halteeinrichtungen (23) zwischen den elastischen Zungen (18) und den Blöcken (6; 6a) eingefügt sind.

15. Bremsbelag nach Anspruch 14, **dadurch gekennzeichnet, dass** die zweiten Halteeinrichtungen (23) für jede besagte elastische Zunge (18) einen jeweiligen Sitz (23) umfassen, der in der jeweiligen besagten Trägerwand (12; 12a) ausgebildet ist und ein Ende (21) der elastischen Zunge (18) beherbergt.

16. Bremsbelag nach einem der vorangehenden Ansprüche, **dadurch gekennzeichnet, dass** die Trägerplatte (2) aus Federstahl hergestellt ist.

17. Bremsbelag nach einem der vorangehenden Ansprüche, **dadurch gekennzeichnet, dass** jeder besagte Block (6; 6a) prismenförmig mit einer Dreiecksbasis mit gerundeten Spitzen ist.

## Revendications

1. Plaquette de frein de véhicule (1), en particulier pour un véhicule de chemin de fer ; la plaquette de frein comprenant une plaque de support (2) ; un certain nombre de blocs (6 ; 6a) de matériau de frottement agencés sur ladite plaque de support (2) et coopérant de manière frictionnelle avec un élément de freinage rotatif ; et des moyens de liaison (10) pour relier lesdits blocs (6 ; 6a) à ladite plaque de support (2), de telle sorte que lesdits blocs (6 ; 6a) soient maintenus dans des positions de repos respectives extraites de ladite plaque de support (2) ; **caractérisée en ce que** lesdits moyens de liaison (10) comprennent des moyens élastiques déformables (18) permettant auxdits blocs (6 ; 6a) de se déplacer desdites positions de repos à des positions de travail retirées respectives ; et des moyens de retenue (23, 30 , 23, 33) pour maintenir lesdits blocs (6 ; 6a) reliés auxdits moyens élastiques (18) au moins dans lesdites positions de repos ; lesdits moyens élastiques (18) étant formés en une seule pièce avec ladite plaque de support (2).

2. Plaquette de frein selon la revendication 1, **caractérisée en ce que** lesdits blocs (6 ; 6a) sont déplaçables indépendamment les uns des autres le long d'axes respectifs (7) perpendiculaires à ladite plaque de support (2) ; lesdits moyens élastiques (18) comprenant, pour chacun desdits blocs (6 ; 6a), au moins une patte élastique respective (18) formée en une seule pièce avec ladite plaque de support (2).

3. Plaquette de frein selon la revendication 2, **caractérisée en ce que** lesdits moyens élastiques (18) comprennent au moins deux desdites pattes élastiques (18) pour chacun desdits blocs (6 ; 6a).

4. Plaquette de frein selon la revendication 3, **caractérisée en ce que**, pour chacun desdits blocs (6 ; 6a), lesdits moyens de retenue comprennent un certain nombre desdites pattes élastiques (18) espacées de manière égale et de manière angulaire autour dudit axe relatif (7).

5. Plaquette de frein selon l'une quelconque des revendications 2 à 4, **caractérisée en ce que** chacune desdites pattes élastiques (18) fait partie intégrante de ladite plaque de support (2) et est formée en découpant et en recourbant une portion relative de ladite plaque de support (2).

6. Plaquette de frein selon l'une quelconque des revendications 2 à 5, **caractérisée en ce que** lesdits moyens de liaison (10) comprennent également, pour chacun desdits blocs (6 ; 6a), une paroi de support respective (12 ; 12a) faisant partie intégrante du bloc (6 ; 6a) ; lesdits moyens de retenue (23, 30 ; 23, 33) comprenant des premiers moyens de retenue (30 ; 33) portés par ladite plaque de support (2) afin de laisser les parois de support (12 ; 12a) reposer axialement sur lesdites pattes élastiques (18) lorsque lesdits blocs (6 ; 6a) sont dans lesdites positions de repos.

7. Plaquette de frein selon l'une quelconque des revendications 2 à 6, **caractérisée en ce que** lesdits moyens de liaison (10) comprennent également des moyens de guidage (27 ; 33) portés par ladite plaque de support (2) afin de guider chacun desdits blocs (6 ; 6a) le long dudit axe relatif (7).

8. Plaquette de frein selon les revendications 6 et 7, **caractérisée en ce que** lesdits premiers moyens de retenue (30 ; 33) sont portés par lesdits moyens de guidage (27 ; 33).

9. Plaquette de frein selon la revendication 8, **caractérisée en ce que** lesdits moyens de guidage (27) comprennent, pour chacun desdits blocs (6 ; 6a), une cheville axiale respective (27) placée de manière axialement coulissante à ladite paroi de support relative (12), et se terminant par une tête (30) située sur le côté axial opposé de ladite paroi de support (12) à ladite plaque de support (2) et définissant lesdits premiers moyens de retenue.

10. Plaquette de frein selon la revendication 8, **caractérisée en ce que** lesdits premiers moyens de retenue (33) comprennent un corps de retenue (33) entourant lesdits blocs (6a).

11. Plaquette de frein selon la revendication 10, **caractérisée en ce que** ledit corps de retenue (33) comprend un certain nombre de trous (36) engagés de manière axialement coulissante par lesdits blocs respectifs (6a) ; lesdites parois de support (12a) comprenant des portions d'extrémité respectives (31) interposées de manière axiale entre ladite plaque de support (2) et ledit corps de retenue (33).

12. Plaquette de frein selon la revendication 10 ou 11, **caractérisée en ce qu'**elle comprend un certain nombre de rivets (35) pour relier une portion périphérique (34) dudit corps de retenue (33) à ladite plaque de support (2).

13. Plaquette de frein selon l'une quelconque des revendications 6 à 12, **caractérisée en ce que** lesdits moyens de retenue (23, 30 ; 23, 33) comprennent également des seconds moyens de retenue (23) pour empêcher chacun desdits blocs (6 ; 6a) de se déplacer dans des directions perpendiculaires audit axe relatif (7).

14. Plaquette de frein selon la revendication 13, **caractérisée en ce que** lesdits seconds moyens de retenue (23) sont interposés entre lesdites pattes élastiques (18) et lesdits blocs (6 ; 6a).

15. Plaquette de frein selon la revendication 14, **caractérisée en ce que** lesdits seconds moyens de retenue (23) comprennent, pour chacune desdites pattes élastiques (18), un siège relatif (23) formé dans ladite paroi de support relative (12 ; 12a) et renfermant une extrémité (21) de ladite pattes élastique (18).

16. Plaquette de frein selon l'une quelconque des revendications précédentes, **caractérisée en ce que** ladite plaque de support (2) est fabriquée en acier à ressort.

17. Plaquette de frein selon l'une quelconque des revendications précédentes, **caractérisée en ce que** chacun desdits blocs (6 ; 6a) est de forme prismatique, avec une base triangulaire possédant des sommets arrondis.
